# FASCICULE DE BREVET EUROPEEN

(11) **EP 0 734 863 B1**
(45) Date de publication et mention de la délivrance du brevet: **27.10.1999**
(21) Numéro de dépôt: 96810169.1
(22) Date de dépôt: 18.03.1996
(51) Int. Cl.: B41F 33/00

(54) **Procédé de contrôle automatique au moyen d'un dispositif opto-électronique**
Automatisches Regelverfahren mit Hilfe einer optoelektronischen Einrichtung
Automatic control method by means of an optoelectronic device

(30) Priorité: 30.03.1995 IT MI950637
(43) Date de publication de la demande: 02.10.1996
(73) Titulaire: DE LA RUE GIORI S.A., 1003 Lausanne (CH)
(72) Inventeur: Stringa, Luigi, 38050 Trento (IT)
(74) Mandataire: Kiliaridis, Constantin

(56) Documents cités:
- EP-A- 0 444 583
- DE-A- 4 218 760
- DE-A- 4 218 761
- US-A- 4 273 045
- US-A- 5 022 089
- PATENT ABSTRACTS OF JAPAN vol. 9, no. 256 (M-421) [1979] , 15 Octobre 1985 & JP-A-60 107345 (TOPPAN INSATSU K.K.), 12 Juin 1985,
- PATENT ABSTRACTS OF JAPAN vol. 9, no. 279 (M-427) [2002] , 7 Novembre 1985 & JP-A-60 122153 (TOPPAN INSATSU K.K.), 29 Juin 1985,

## Description

La présente invention concerne un procédé de contrôle automatique au moyen d'un dispositif optoélectronique de la qualité d'impression d'une image sur du papier comprenant au moins un dessin imprimé lors d'une phase d'impression.

Lors du contrôle de la qualité d'impression sur du papier et notamment l'impression de papiers-valeurs, on utilise des moyens électroniques d'inspection automatique comprenant une ou plusieurs caméras en noir et blanc ou en couleur, pour saisir les images à inspecter. Ces images sont constituées de matrices, habituellement rectangulaires comprenant des chiffres qui représentent l'intensité de la lumière réfléchie ou autrement dit la valeur densitométrique des pixels dans lesquels est subdivisée l'image. Le nombre de pixels concernant une image est une fonction de la résolution de la caméra. Dans un système monocromatique (noir et blanc), l'image est décrite par une matrice unique, alors que dans des systèmes polychromatiques, la description est constituée par autant de matrices que les canaux chromatiques utilisés. Habituellement, pour les descriptions du type RGB (Red, Green, Blue), on utilise trois canaux chromatiques.

Les procédés utilisés pour effectuer ce type de contrôle automatique sont basés sur les schémas suivants :

A partir d'un groupe de feuilles considérées comme bonnes, un modèle de qualité d'impression acceptable est construit. Pour construire ce modèle, on utilise différentes techniques. Par exemple, en calculant sur le groupe de feuilles considérées comme bonnes, une espèce d'image moyenne, c'est-à-dire une image qui est décrite par une matrice dans laquelle on associe à chaque pixel la valeur moyenne de celui-ci dans le groupe de feuilles-test.

Un autre procédé associe à chaque pixel deux valeurs, une est la valeur minimale qui a été atteinte dans le groupe de feuilles-test et l'autre la valeur maximale. Ainsi, pour chaque image, nous disposons de deux matrices, une avec la valeur minimale et l'autre avec la valeur maximale. Bien entendu, s'il s'agit d'une image polychromatique, on obtient deux matrices par canal de couleur.

Lors de la production des images à inspecter, chaque pixel de l'image à inspecter est confronté avec le pixel du modèle ainsi obtenu. Si la différence dépasse une valeur-seuil prédéterminée ou si elle se trouve à l'extérieur de l'intervalle minimum-maximum, le pixel est considéré comme présentant un défaut d'impression. Le nombre de pixels défectueux détermine l'éventuel rejet de l'image en fonction de la qualité que l'on veut obtenir et qui est préalablement déterminée.

Lors de la production de certains types d'imprimés précieux comme les papiers-valeurs, les billets de banque, timbres, etc., les images sont imprimées avec différentes techniques d'impression, telles que offset, tailledouce, etc. Nous appellerons ces différents types d'impression phases d'impression. Ainsi, dans un processus d'impression normal, le papier passe d'abord dans un système d'impression selon la première phase et un premier dessin est apposé et ensuite il passe dans un deuxième système d'impression pour la deuxième phase d'impression permettant d'apposer sur le papier un deuxième dessin. Dans ce cas, mis à part le problème de la qualité d'impression, il existe également le problème de la mise en registre relatif des dessins imprimés lors des phases différentes. En effet, des écarts peuvent subsister entre deux images imprimées de la sorte concernant les dessins qui sont imprimés en des phases différentes, ne serait-ce qu'à cause de la déformation du papier. Ces déplacements, correspondant à quelques pixels, peuvent être aussi bien dans le sens du déplacement du papier que dans un sens perpendiculaire. Dans ce cas, il n'est plus possible de procéder à une extraction d'un modèle qui représente la qualité d'impression désirée en utilisant les techniques mentionnées précédemment, car à un même pixel on peut associer des valeurs très diverses en fonction des alignements ou registres entre les phases d'impression.

Dans ce cas, on a proposé de construire un modèle pour chaque phase d'impression. Pour ce faire, dans le groupe de feuilles-test sont inclus des groupes de feuilles imprimées uniquement avec chacune des phases d'impression. Avec une procédure analogue à la procédure mentionnée précédemment, on construit un modèle pour chaque phase d'impression. Pendant la phase de préparation de ces modèles, l'opérateur identifie les portions de l'image qui comprennent seulement ou essentiellement une seule phase d'impression.

Lors de la production, on mesure avant tout les désalignements relatifs entre les phases d'impression en utilisant les pixels identifiés durant la préparation des modèles.

Les modèles sont ensuite combinés en tenant compte de la manière que les différentes phases sont imprimées successivement sur les feuilles pour obtenir un modèle de référence unique dont la disposition correspond à la disposition des dessins dans les images à vérifier. Ensuite, chaque image est confrontée au modèle ainsi produit. Ce procédé est complexe et particulièrement onéreux pour l'imprimeur car pour chaque lot de production, il faut imprimer autant de groupes de feuilles représentatifs de la qualité d'impression désirée, ainsi que des phases d'impression.

Le même inventeur a proposé dans la demande de brevet: EP-A-0730959 (citée en vertu de l'Art. 54C3)CBE) un procédé permettant de déterminer à partir d'un groupe de feuilles-test un modèle par dessin imprimé lors d'une phase précise d'impression. Ensuite, on combine les modèles ainsi obtenus pour former un seul modèle de référence de l'image à contrôler.

La présente invention a pour but, d'une part, de supprimer les problèmes de l'art antérieur et, d'autre part, de proposer une alternative au procédé précité du même inventeur.

Le procédé de contrôle selon l'invention est caractérisé en ce que l'on prépare plusieurs modèles de référence, chacun correspondant à un désalignement acceptable et que l'on compare les images imprimées avec le ou les modèles de référence le ou les plus proches.

L'avantage de la présente invention est sa grande flexibilité quant à la formation de modèles de référence. En effet, il y a plusieurs manières de préparer les modèles de référence avec les désalignements acceptables. Par exemple on peut par des méthodes conventionnelles choisir le modèle de référence de chacun des dessins et ensuite former des images de référence en combinant lesdits dessins avec des désalignements relatifs se trouvant à l'intérieur de valeurs acceptables. Les images de référence sont obtenues soit par le calcul, soit par une impression adéquate. Le modèle de chaque dessin peut être obtenu soit par des moyens connus, soit par le procédé décrit dans la demande de brevet susmentionnée du même inventeur.

Selon une variante préférée de l'invention, les modèles de référence peuvent être produits à partir des images-test, chaque image présentant un désalignement acceptable.

Selon une autre variante d'exécution, les modèles de référence à utiliser sont choisis par la méthode permettant d'obtenir la meilleure correspondance entre des pixels prédéterminés des modèles de référence et leur correspondants sur l'image à contrôler (best matching).

L'avantage de la présente méthode est qu'elle permet également de réduire les effets du bruit d'échantillonage qui peuvent fausser les résultats lorsque le désalignement entre le dispositif optoélectronique et l'image à saisir ou à contrôler est inférieur aux dimensions du pixel dudit dispositif. En effet, lors d'un tel contrôle si une ligne noire est exactement centrée sur le capteur, ou si elle est légèrement décalée, les valeurs densitométriques captées seront différentes.

Dans le but de réduire les effets d'un tel désalignement entre la caméra et l'image à capter ou à contrôler, on peut également produire pour chaque dessin constituant l'image des modèles de référence correspondant à des écartements possibles inférieurs aux dimensions du pixel du dispositif optoélectronique. Ainsi, lors du contrôle, un mauvais alignement entre la caméra et l'image ne faussera pas le résultat du contrôle.

Ce procédé demande dans un premier temps une utilisation plus importante de la mémoire du système électronique, mais il n'y a aucun calcul à effectuer lors de la phase d'inspection. Il s'en suit que le procédé est plus rapide.

L'invention sera décrite plus en détails en utilisant deux figures simples.

Les figures 1 et 2 représentent deux images à contrôler constituées de deux dessins distincts dont les positions relatives ne sont pas les mêmes.

La figure 3 représente schématiquement une installation permettant de mettre en oeuvre le procédé.

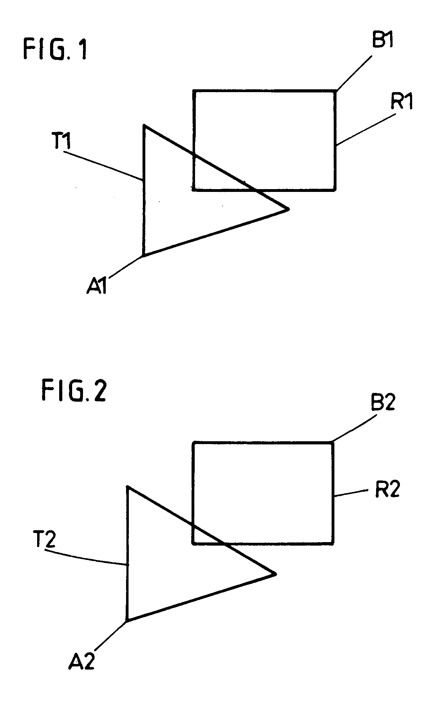

A la figure 1, nous avons représenté une image composée d'un triangle T1 et d'un rectangle R1. Chacun de ces dessins est imprimé lors d'une phase d'impression différente, par exemple, le triangle lors d'une impression offset et le rectangle lors d'une impression intaglio.

A la figure 2, on a représenté une image comprenant également un triangle T2 et un rectangle R2 imprimés également respectivement lors d'une phase offset et intaglio, la seule différence entre les deux images étant le fait que les positions relatives du rectangle et du triangle ne sont pas les mêmes. Sur ce dessin on a, bien entendu, exagéré le désalignement. En principe ce désalignement lors de l'impression n'est que de quelques pixels.

Selon le procédé de la présente invention, le contrôle de la qualité d'impression et notamment le contrôle concernant le désalignement entre les deux dessins constituant l'image se fera en comparant chacune des images représentées aux deux figures avec des modèles de référence, lesquels sont constitués par des triangles et rectangles dont les désalignements relatifs sont dans des limites acceptables qui ont été prédéterminées.

Une caméra 2 inspecte des feuilles 1 passant devant elle et l'image captée passe dans un dispositif 3 qui permet de mesurer la valeur du désalignement. Cette valeur du désalignement est transmise dans une mémoire dans laquelle on a indiqué tous les modèles avec des désalignements acceptables. Ceci permet de choisir le bon modèle qui par la suite est envoyé à un dispositif 5 qui est un comparateur. La qualité de l'impression est ainsi contrôlée en utilisant les modèles sélectionnés de la mémoire 4 avec l'image captée par la caméra 2.

Il est évident que ce dispositif demande une mémoire importante puisque l'on doit dans cette mémoire stocker tous les modèles avec les désalignements acceptables, mais en revanche on n'a pas besoin lors du contrôle d'effectuer des calculs puisqu'il suffit d'identifier le modèle correspondant au désalignement trouvé par le dispositif 3 pour passer ensuite au contrôle de qualité.

La production de ces modèles de référence est faite en fonction de la qualité d'impression. Ainsi, lorsqu'on a fixé les tolérances de l'impression (désalignement acceptable), on produit les modèles de référence soit par calcul, soit en partant d'un nombre de feuilles-test acceptable dont les images sont saisies dans la mémoire d'un système électronique. Lors du passage d'une image telle que celle de la figure 1 ou 2, on compare cette image avec le modèle de référence qui est le plus proche et si les différences sont nulles ou à l'intérieur d'une fourchette prédéterminée (tolérance), l'image est acceptée, autrement elle est rejetée.

La production de l'image de référence peut être faite d'autres manières. Par exemple, on produit pour chaque dessin un modèle de référence soit par des méthodes connues, soit par la méthode mise au point par l'inventeur faisant l'objet de la demande de brevet précitée et on recompose l'image avec différents alignements relatifs à l'intérieur des tolérances définies.

Il est évident que le nombre de modèles de référence utilisés détermine la précision du système. Une méthode pour sélectionner les modèles à utiliser lors du contrôle de qualité est la technique permettant de mettre en correspondance entre les modèles de référence et l'image à contrôler certains pixels prédéterminés. Dans le cas de l'image présentée sur les deux figures, on pourrait utiliser, par exemple, l'angle inférieur du triangle et l'angle supérieur éloigné du rectangle qu'on appellerait A1, A2, B1, B2. Ainsi, lors du contrôle, on essayerait de faire correspondre les pixels A1 et B1 ou A2 et B2 de l'image à contrôler avec des pixels correspondants sur les modèles de référence.

Ce procédé permet également de corriger les effets du bruit d'échantillonage liés à la position relative de la caméra et de l'image à saisir ou à contrôler. En effet, l'alignement caméra-image à contrôler ou à saisir ne peut pas être toujours parfait, ainsi si par exemple une ligne noire dont la largeur correspond à celle du pixel se trouve exactement face au capteur, sa valeur densitométrique captée est différente de celle de la même ligne noire légèrement décalée, un décalage inférieur à la largeur du pixel.

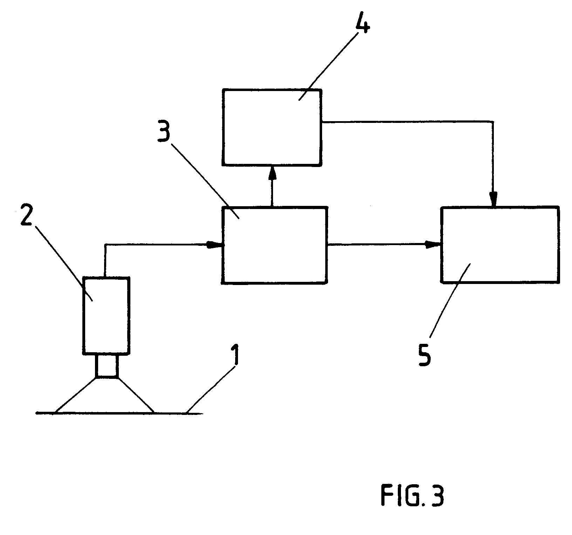

Pour réduire, voire éliminer ces effets du désalignement caméra-image, le même procédé peut être utilisé, c'est-à-dire produire un certain nombre de modèles de référence tenant compte également de ce désalignement entre la caméra et l'image, désalignement qui est strictement limité aux dimensions du pixel. Dans ce cas on peut produire des modèles présentant, par exemple, des désalignements de ± 0.5 pixel avec un pas de 0.1 pixel ceci bien entendu dans les deux directions x et y. Ainsi on crée pour le cas susmentionné 121 modèles qui sont stockés dans la mémoire, par exemple le dispositif 4 décrit à la figure 3 utilisé par la suite pour sélectionner les modèles adéquats et procéder au contrôle de qualité. Là aussi, aucun accroissement significatif du travail n'est produit sauf en ce qui concerne la mémoire du système électronique utilisée.

Il est évident que la technique de modèles multiples pour la réduction de l'effet du bruit d'échantillonage même en cas d'impression à phases multiples est applicable puisqu'il suffit de produire plusieurs modèles de référence correspondant aux divers alignements pour chaque phase d'impression entre la caméra et le dessin.

## Revendications

1. Procédé de contrôle automatique au moyen d'un dispositif optoélectronique, de la qualité d'impression d'une image sur du papier comprenant au moins un dessin imprimé lors d'une phase d'impression, caractérisé en ce que l'on prépare plusieurs modèles de référence, chacun correspondant à un désalignement acceptable et que l'on compare les images imprimées avec le ou les modèles de référence le ou les plus proches.

2. Procédé selon la revendication 1, caractérisé en ce que les modèles de référence sont produits à partir des images-test, chaque image-test présentant un désalignement acceptable.

3. Procédé selon la revendication 1, caractérisé par le fait que les modèles de référence sont formés en produisant un modèle de référence pour chaque dessin imprimé lors d'une phase d'impression, et en combinant ensuite les modèles de référence de chaque dessin pour former l'image à contrôler selon des alignements relatifs différents et acceptables.

4. Procédé selon l'une des revendications 1 à 3, caractérisé par le fait que le choix de modèles de référence à utiliser lors de contrôles est fait en cherchant la meilleure correspondance entre un nombre prédéterminé de pixels des modèles de référence et leur correspondants sur les images à contrôler.

5. Procédé selon la revendication 1, caractérisé par le fait que ledit désalignement est inférieur à la grandeur du pixel du dispositif optoélectronique.

6. Procédé selon la revendication 5, caractérisé par le fait que ledit désalignement est un désalignement relatif entre le dispositif optoélectronique et l'image à contrôler permettant ainsi de réduire les inconvénients du bruit d'échantillonage lors de la production d'un modèle de référence ou de contrôle de qualité.

7. Procédé selon l'une des revendications 1 à 4, caractérisé en ce que l'on prépare aussi des modèles de référence pour chaque dessin, chaque modèle correspondant à un désalignement relatif possible entre le dispositif optoélectronique et le dessin, le désalignement étant inférieur aux dimensions du pixel du dispositif optoélectronique.

## Claims

1. A method for automatic control, by means of an optoelectronic device, of the printing quality of an image on paper comprising at least one design printed during a printing phase, wherein a plurality of reference models are prepared, each corresponding to an acceptable misalignment, and wherein the printed images are compared with the closest reference model or models.

2. The method as claimed in claim 1, wherein the reference models are produced from test images, each test image having an acceptable misalignment.

3. The method as claimed in claim 1, wherein the reference models are formed by producing one reference model for each design printed during a printing phase, and by subsequently combining the reference models of each design in order to form the image for inspection according to different and acceptable relative alignments.

4. The method as claimed in one of claims 1 to 3, wherein the reference models to be used during the evaluations are selected by searching for the best correspondence between a predetermined number of pixels of the reference models and their correspondents on the images for evaluation.

5. The method as claimed in claim 1, wherein said misalignment is less than the pixel size of the optoelectronic device.

6. The method as claimed in claim 5, wherein said misalignment is a relative misalignment between the optoelectronic device and the image for inspection, thus making it possible to reduce the drawbacks of sampling noise during the production of a reference model or quality evaluation.

7. The method as claimed in any one of claims 1 to 4, wherein reference models are also prepared for each design, each model corresponding to a possible relative misalignment between the optoelectronic device and the design, the misalignment being less than the pixel dimensions of the optoelectronic device.

## Patentansprüche

1. Verfahren zur automatischen Kontrolle der Druckqualität eines Bildes auf Papier, das wenigstens ein während einer Druckphase aufgedrucktes Muster aufweist, mit Hilfe einer optoelektronischen Einrichtung, dadurch gekennzeichnet, dass man mehrere Bezugsmodelle herstellt, von denen jedes einer zulässigen Falschausrichtung entspricht, und dass man die gedruckten Bilder mit dem oder den am nächsten gelegenen Bezugsmodell oder Bezugsmodellen vergleicht.

2. Verfahren nach Anspruch 1, dadurch gekennzeichnet, dass die Bezugsmodelle aus Testbildern erzeugt werden, von denen jedes eine zulässige Falschausrichtung hat.

3. Verfahren nach Anspruch 1, dadurch gekennzeichnet, dass die Bezugsmodelle gebildet werden, indem man für jedes während einer Druckphase aufgedrucktes Muster ein Bezugsmodell erzeugt und dann die Bezugsmodelle jedes Musters kombiniert, um das zu kontrollierende Bild gemäss den relativen verschiedenen und zulässigen Ausrichtungen zu bilden.

4. Verfahren nach einem der Ansprüche 1 bis 3; dadurch gekennzeichnet, dass die Wahl der während der Kontrollen zu verwendenden Bezugsmodelle so erfolgt, dass die beste Übereinstimmung zwischen einer vorbestimmten Zahl von Pixeln der Bezugmodelle und ihren Entsprechungen auf den zu kontrollierenden Bildern gesucht wird.

5. Verfahren nach Anspruch 1, dadurch gekennzeichnet, dass die erwähnte Falschausrichtung kleiner ist als die Pixelgrösse der optoelektronischen Einrichtung.

6. Verfahren nach Anspruch 5, dadurch gekennzeichnet, dass die erwähnte Falschausrichtung eine relative Falschausrichtung zwischen der optoelektronischen Einrichtung und dem zu kontrollierenden Bild ist, was es erlaubt, die Nachteile des Samplingrauschens bei der Herstellung eines Bezugsmodells oder der Qualitätskontrolle zu verringern.

7. Verfahren nach einem der Ansprüche 1 bis 4, dadurch gekennzeichnet, dass man auch Bezugsmodelle für jedes Muster herstellt, wobei jedes Modell einer möglichen relativen Falschausrichtung zwischen der optoelektronischen Einrichtung und dem Muster entspricht und die Falschausrichtung geringer ist als die Pixelabmessungen der optoelektronischen Einrichtung.
